# EUROPEAN PATENT APPLICATION

(11) **EP 1 437 640 A2**
(43) Date of publication of application: **14.07.2004**
(21) Application number: 03028500.1
(22) Date of filing: 12.12.2003
(51) Int. Cl.: G06F 3/00, G06F 3/033

(54) **Force-feedback input device**

(30) Priority: 27.12.2002 JP 2002381705
(71) Applicant: ALPS ELECTRIC CO., LTD., Tokyo 145-8501 (JP)
(72) Inventor: Hayasaka, Satoshi, Ota-ku, Tokyo 145-8501 (JP)
(74) Representative: Klunker . Schmitt-Nilson . Hirsch

(57) **Abstract**

There are provided a sense-of-force imparting means for imparting a reaction force of manipulation (sense of force) to a lever, and a CPU for controlling the sense-of-force imparting means so that the reaction force of manipulation changes in conjunction with changes in the tilt angle of the lever, and controlling a display means so that a map screen is scrolled in a direction corresponding to the tilt direction and the scrolling speed changes in conjunction with changes in the tilt angle.

## Description

### BACKGROUND OF THE INVENTION

### 1. Field of the Invention

The present invention relates to an input/output apparatus provided in electric equipment, such as personal computers and car navigation systems, for scrolling a display in accordance with signals entered by operating an operating member, such as a wheel or a lever provided on a mouse.

### 2. Description of the Related Art

In a car navigation system, for example, there is provided an input/output apparatus for scrolling a map display into a desired direction by entering signals by operating a manually operated operating member, such as a lever. However, such input/output apparatus is not provided with means for imparting a sense of force to the operating member.

In the present circumstances, document including statement relating to the present invention could not be found in the related art.

In a car navigation system, the scrolling speed of the display is constant. However, the operator tends to exert excessive operating force to the lever because he/she wants to display a desired screen page as soon as possible by scrolling the unnecessary screen pages quickly.

### SUMMARY OF THE INVENTION

In view of such circumstances, it is an object of the present invention to provide a sense of force imparting input/output apparatus in which the scrolling speed of the display is adjustable by adjusting the operating force imparted to the operating member.

In order to achieve the object described above, the first aspect of the invention includes an operating member to be operated manually, detecting means for detecting the operating direction and the amount of operation of the operating member and outputting a detection signal indicating the operating direction and the amount of operation, sense-of-force imparting means for imparting a reaction force of manipulation to the operating member, display means for displaying screen pages, and control means for controlling the sense-of-force imparting means and the display means so that the reaction force of manipulation corresponds to the scrolling speed according to the operating direction and the amount of operation indicated by the detection signal, and is characterized in that the control means includes a reaction-force-of-manipulation calculating unit for performing an arithmetical operation for obtaining the direction of the reaction force of manipulation corresponding to the operating direction and the magnitude of the reaction force of manipulation corresponding to the amount of operation, the reaction-force-of-manipulation calculating unit calculating the reaction force of manipulation so as to increase with the amount of operation, a reaction force of manipulation control unit for setting an reaction force of manipulation control signal for making the sense-of-force imparting means operate based on the reaction force of manipulation calculated by the reaction-force-of-manipulation calculating unit and outputting the reaction force of manipulation control signal to the sense-of-force imparting means, a scrolling speed calculating unit for calculating the scrolling direction corresponding to the operating direction and the scrolling speed corresponding to the amount of operation, and a scroll control unit for setting a scroll control signal for making the display means operate so that the display pages are scrolled at a speed calculated by the scrolling speed calculating unit and outputting the scroll control signal to the display means.

The operation of the first aspect of the invention in this arrangement will be described.

In the course where the amount of operation of the operating member in a given operating direction is changing, the given operating direction is detected by the detecting means as the operating direction, the amount of operation which is changing is detected every second, and a detection signal indicating the given operating direction and the amount of operation is outputted to the control means in response to the detection of the amount of operation.

The control means performs an arithmetical operation of the reaction force of manipulation by means of the reaction-force-of-manipulation calculating unit in response to the reception of the detection signal, and the reaction force of manipulation corresponding to the amount of operation in the direction opposite from the given operating direction is obtained. In this case, when the amount of operation indicated by the detection signal increases in response to the input of the detecting signal into the control means, the reaction force of manipulation calculated by the reaction-force-of-manipulation calculating unit increases correspondingly with every calculation. When the amount of operation indicated by the detection signal decreases in response to every input of the detection signal into the control means, the reaction force of manipulation calculated by the reaction-force-of- manipulation control unit decreases correspondingly with every calculation. Then, the reaction force of manipulation control unit sets a reaction force of manipulation control signal corresponding to the calculated reaction force of manipulation and outputs the same to the sense-of-force imparting means each time when the reaction-force-of-manipulation calculating unit calculates the reaction force of manipulation.

The sense of force control means is activated in response to the input of the reaction force of manipulation control signal. Accordingly, when the amount of operation of the operating member in a given operating direction is in the course of increase, the reaction force of manipulation in the direction opposite to the given operating direction increases in conjunction with increase in the amount of operation. When the amount of operation of the operating member in a given operating direction is in the course of decrease, the reaction force of manipulation in the direction opposite from the given operating direction decreases in conjunction with decrease in the amount of operation.

The control means performs control of the scrolling motion of display pages simultaneously with control of the reaction force of manipulation described above. In other words, in response to the input of the detection signal into the control means, the scrolling speed calculating unit calculates a scrolling direction corresponding to the given operating direction and a speed of scrolling corresponding to the amount of operation, that is, a scrolling speed. Then, each time when the scrolling speed calculating unit calculates a scrolling speed, a scroll control signal corresponding to the calculated scrolling speed is outputted to the display means.

Subsequently, the display means is activated based on the scroll control signal in response to the reception thereof. Accordingly, the display pages are scrolled in a direction corresponding to the given operating direction of the operating member at a speed corresponding to the amount of operation thereof. In other words, when the amount of operation of the operating member in the given operating direction is in the course of increase, scrolling in a direction corresponding to the given operating direction is, for example, accelerated in conjunction with increase in the amount of operation. When the amount of operation of the operating member in the given operating direction is in the course of decrease, scrolling in a direction corresponding to the given operating direction is decelerated in conjunction with decrease in the amount of operation in contrast to the case in which the amount of operation increases. The relation between changes in the amount of operation and the acceleration or deceleration of scrolling may be vice versa.

As described thus far, according to the first aspect of the invention, the magnitude of the reaction force of manipulation imparted to the operating member and the scrolling speed change in conjunction with changes in the amount of operation of the operating member. In other words, the magnitude of a resistance force (sense of force) that is imparted by the operating member to the operator corresponds to the scrolling speed. Therefore, the operator can adjust the scrolling speed of the screen pages by adjusting an operating force exerted on the operating member.

Preferably, the scrolling speed calculating unit is adapted to calculate the scrolling speed so as to increase with the reaction force of manipulation calculated by the reaction-force-of-manipulation calculating unit.

In this arrangement, since the scrolling speed increases in conjunction with increase in the reaction force of manipulation, and the scrolling speed decreases in conjunction with decrease in the reaction force of manipulation, the operator can accelerate scrolling by increasing the operating force exerted on the operating member, and can decelerate scrolling by decreasing the operating force exerted thereon.

Preferably, the operating member is provided with a neutral position, the operating member is provided so as to be capable of tilting in directions of 360-degrees from the neutral position, the display means is adapted to display a cursor moving on the screen, and the control means includes a cursor position calculating unit for performing an arithmetical operation for calculating the position of the cursor corresponding to the tilt direction and the tilt angle with respect to the center of the screen, and a cursor control unit for setting a cursor control signal for operating the display means so that the cursor is displayed at the cursor position which is calculated by the cursor position calculating unit.

In this arrangement, the cursor position calculating unit calculates the cursor position corresponding to the tilt direction and tilt angle indicated by the detection means in response to the input of the detection signal into the control means. In this case, when the tilt angle indicated by the detection signal increases each time when the detection signal is input to the control means, the cursor position calculated by the cursor position calculating unit moves away from the center of the screen on a track corresponding to a given tilt direction each time when the input of the detection signal is input to the control means. When the tilt angle indicated by the direction signal decreases each time when the detection signal is input into the control means, the cursor position calculated by the cursor position detecting unit moves, toward the center of the screen on a track corresponding to the given tilt direction for each calculation. Each time when the cursor position calculating unit calculates a cursor position, the cursor control unit sets a cursor control signal corresponding to the calculated cursor position and outputs the same to the display means.

The display means is activated based on the cursor control signal in response to the reception thereof. Accordingly, the cursor moves in conjunction with changes in the tilt angle on a track corresponding to the tilt direction of the operating member. That is, when the tilt angle of the operating member in the given tilt angle is in the course of increase, the cursor moves away from the center of the screen on a track corresponding to the given tilt direction in conjunction with increase in the tilt angle. When the tilt angle of the operating member in the given tilt direction is in the course of decrease, the cursor moves toward the center of the screen in conjunction with decrease in the tilt angle on a track corresponding to the given tilt direction.

Therefore, the cursor moves away from the center of the screen on a track corresponding to the given tilt direction when the scrolling motion of the screen pages in the given tilt direction is, for example, accelerated in conjunction with increase in the tilt angle of the operating member in the given tilt direction. While the cursor moves toward the center of the screen on a track corresponding to the given tilt direction when the scrolling motion of the screen pages in a direction corresponding to the given tilt direction is decelerated in conjunction with decrease in the tilt angle of the operating member in the given tilt direction.

In other words, in this arrangement, since the cursor position with respect to the center of the screen corresponds to the scrolling speed, the operator can use the cursor as an index of the scrolling direction and the scrolling speed of the screen pages.

The second aspect of the invention includes an operating member to be operated manually, detecting means for detecting the operating direction and the amount of operation of the operating member and outputting a detection signal indicating the operating direction and the amount of operation, sense-of-force imparting means for imparting a reaction force of manipulation to the operating member, display means for displaying screen pages, and control means for controlling the sense-of-force imparting means and the display means so that the reaction force of manipulation corresponds to the scrolling speed according to the operating direction and the amount of operation detected by the detection signal, and is characterized in that the control means includes an amount of operation determining unit for determining whether the amount of operation is a predetermined first amount of operation, a predetermined second amount of operation which is smaller than the first amount of operation, or an amount in the range between the first amount of operation and the second amount of operation, a holding time measuring unit for measuring a time period during which the amount of operation is maintained when the amount of operation determining unit determined that the amount of operation was in the range between the first amount of operation and the second amount of operation, an reaction-force-of-manipulation calculating unit for calculating the reaction force of manipulation based on the amount of operation determined by the amount of operation determining unit, the time period measured by the holding time measuring unit, and the operating direction indicated by the detection signal, the reaction-force-of-manipulation calculating unit being constructed in such a manner that when the amount of operation is the first amount of operation, the reaction force of manipulation is calculated so as to increase with the length of time period during which the amount of operation is held at the first amount of operation, that when it is determined that the amount of operation has changed after having determined to be the first amount of operation and reached the second amount of operation, the amount of operation is calculated so as to decrease with respect to the reaction force of manipulation obtained at the time when the amount of operation reached the second amount of operation in accordance with the length of time during which the amount of operation is held at the second amount of operation, and that when it is determined that the amount of operation has changed after having determined to be the first amount of operation and fell within the range between the first amount of operation and the second amount of operation, the reaction force of manipulation which corresponds to the reaction force of manipulation obtained at the time when the amount of operation fell within the range is calculated, a reaction force of manipulation control unit for setting a reaction force of manipulation control signal for operating the sense-of-force imparting means based on the reaction force of manipulation calculated by the reaction-force-of-manipulation calculating unit and outputs the reaction force of manipulation control signal to the sense-of-force imparting means, and a scrolling speed calculating unit for performing arithmetic operation for calculating a scrolling direction corresponding to the operating direction and a scrolling speed corresponding to the magnitude of the reaction force of manipulation based on the reaction force of manipulation calculated by the reaction-force-of-manipulation calculating unit, and a scroll control unit for setting a scroll control signal for activating the display means so that the screen pages are scrolled at a scrolling speed calculated by the scrolling speed calculating unit and outputting the scroll control signal to the display means.

In this arrangement, when the amount of operation of the operating member in a given operating direction is held at the first amount of operation, the detecting means detects the first amount of operation in the given operating direction and the detection signal is outputted to the control means.

Then, in the control means, the amount of operation determining unit determines that the amount of operation is the first amount of operation. The holding time measuring unit measures a time period during which the amount of operation is held at the first amount of operation every second, and in response to the measurement of the time period, the reaction-force-of-manipulation calculating unit calculates a reaction force of manipulation of a magnitude corresponding to the length of the time period during which the amount of operation is held at the first amount of operation in the direction opposite from the given operating direction. In other words, the reaction force of manipulation calculated increases with the length of time period during which the amount of operation is held at the first amount of operation. Each time when the reaction-force-of-manipulation calculating unit calculates a reaction force of manipulation, the reaction force of manipulation control unit sets a reaction force of manipulation control signal corresponding to the calculated reaction force of manipulation and outputs the same to the sense-of-force imparting means.

The sense-of-force imparting means is activated based on the reaction force of manipulation control signal in response to the reception thereof. Accordingly, the reaction force of manipulation in the direction opposite from the given operating direction increases with elapse of time in a state in which the amount of operation is held at the first amount of operation.

When the amount of operation of the operating member returns to the range between the first amount of operation and the second amount of operation while the reaction force of manipulation is increasing as described above and is still changing in the range, the detection means detects the given operating direction, and detects the amount of operation which is in the course of changing in the range between the first amount of operation and the second amount of operation every second, and a detection signal is outputted to the control means in response to the detection of the amount of operation.

In the control means, the amount of operation determining unit determines that the amount of operation is within the range between the first amount of operation and the second amount of operation in response to the input of detection signal. Then, each time when the reaction-force-of-manipulation calculating unit determines that the amount of operation is in the range between the first amount of operation and the second amount of operation, a reaction force of manipulation which corresponds to the reaction force of manipulation obtained at the time when the amount of operation fell within the range between the first amount of operation and the second amount of operation is calculated. Then, each time when the reaction-force-of-manipulation calculating unit calculates a reaction force of manipulation, the reaction force of manipulation control unit sets a reaction force of manipulation control signal corresponding to the calculated reaction force of manipulation and outputs the same to the sense-of-force imparting means.

The sense-of-force imparting means is activated based on the reaction force of manipulation control signal in response to the reception thereof. Accordingly, the reaction force of manipulation is maintained at the reaction force of manipulation obtained at the time when the amount of operation fell within the range between the first amount of operation and the second amount of operation.

When the amount of operation of the operating member is returned to the second amount of operation and is kept constant, the detecting means detects the given operating direction as well as the second amount of operation, and outputs the detection signal to the control means.

In the control means, the amount of operation determining unit determines that the amount of operation is the second amount of operation. Then, the holding time measuring unit measures the time period during which the amount of operation is held at the second amount of operation every second, and the reaction-force-of-manipulation calculating unit calculates the magnitude of the reaction force of manipulation corresponding to the length of the time period during which the amount of operation is held at the second amount of operation in the direction opposite from the given operating direction. In other words, the amount of operation is calculated so as to decrease with respect to the reaction force of manipulation obtained at the time when the amount of operation reached the second amount of operation in accordance with the length of time during which the amount of operation is held at the second amount of operation. Then, each time when the reaction-force-of-manipulation calculating unit calculates the reaction force of manipulation, the reaction force of manipulation control unit sets a reaction force of manipulation control signal corresponding to the calculated reaction force of manipulation and outputs the same to the sense-of-force imparting means.

The sense-of-force imparting means is activated based on the reaction force of manipulation control signal in response to the reception thereof. Accordingly, the reaction force of manipulation in the direction opposite from the given operating direction decreases with respect to the reaction force of manipulation obtained at a moment when the amount of operation reached the second amount of operation with elapse of time in a state in which the amount of operation in the given operating direction is held at the second amount of operation.

Even when the amount of operation of the operating member fell again within the range between the first amount of operation and the second amount of operation while the reaction force of manipulation is in the course of decrease, the reaction force of manipulation at that time is maintained.

On the other hand, the control means performs control of the scrolling motion of the screen pages simultaneously with control of the reaction force of manipulation. In other words, each time when the reaction-force-of-manipulation calculating unit calculates a reaction force of manipulation, the scrolling speed calculating unit calculates a scrolling direction corresponding to the given operating direction and a scrolling speed corresponding to the magnitude of the calculated reaction force of manipulation, that is, a scrolling speed, based on the calculated reaction force of manipulation. Then, each time when the scrolling speed calculating unit calculates a scrolling speed, the scroll control unit sets a scroll control signal corresponding to the calculated scrolling speed and outputs the same to the display means.

Then, the display means is activated based on the scroll control signal in response to the reception thereof. Accordingly, the screen pages are scrolled in a direction corresponding to the given operating direction at a speed corresponding to the magnitude of the reaction force of manipulation in the direction opposite from the given operating direction. In other words, when the reaction force of manipulation in the direction opposite from the given operating direction is in the course of increase, the scrolling motion of the screen pages in a direction corresponding to the given operating direction is, for example, accelerated in conjunction with increase in the reaction force of operation. On the other hand, when the reaction force of manipulation in the direction opposite from the given operating direction is in the course of decrease, the scrolling motion of the screen pages in a direction corresponding to the given operating direction is decelerated in conjunction with increase in the reaction force of manipulation in contrast to the case in which the reaction force of manipulation increases. The relation between changes in the magnitude of the reaction force of manipulation and the acceleration or deceleration of the scrolling motion of the screen pages may be vice versa.

As described thus far, in this arrangement, the scrolling speed changes in conjunction with changes in the magnitude of the reaction force of manipulation imparted to the operating member. In other words, the magnitude of a resistance force (sense of force) that is imparted by the operating member to the operator corresponds to the scrolling speed. Therefore, the operator can adjust the scrolling speed of the screen pages by adjusting the operating force exerted on the operating member.

In addition to the second aspect of the invention, preferably, the control means includes an oscillation control unit for outputting an oscillation control signal to the sense-of-force imparting means, the oscillation control signal activating the sense-of-force imparting means to make the operating member oscillate when the amount of operation determining unit determines that the amount of operation is the first amount of operation and that the amount of operation is the second amount of operation.

Preferably, the oscillation control signal is entered from the oscillation control unit to the sense-of-force imparting means when the operating member is held at the first amount of operation and when the operating member is held at the second amount of operation while the screen pages are scrolling, whereby the operating member oscillates. Therefore, the operator can recognize the first amount of operation and the second amount of operation from the oscillation (sense of force) of the operating member.

Still preferably, the scrolling speed calculating unit is adapted to calculate a scrolling speed so as to increase with the increase of the reaction force of manipulation calculated by the reaction-force-of-manipulation calculating unit.

In this arrangement, since the scrolling speed increases in conjunction with the increase in the reaction force of manipulation, and decreases in conjunction with the decrease in the operating reaction force, the operator can accelerate the scrolling speed by increasing the operating force to be exerted on the operating member, and decelerate the scrolling speed by decreasing the operating force.

### BRIEF DESCRIPTION OF THE DRAWINGS

Fig. 1 is a block diagram showing the construction of a sense-of-force imparting input/output apparatus according to the first embodiment; and
Fig. 2 is a block diagram showing the construction of a sense-of-force imparting input/output apparatus according to the second embodiment.

### DESCRIPTION OF THE PREFERRED EMBODIMENT

Referring now to the drawings, embodiments of a sense of force imparting input/output apparatus according to the present invention will be described.

### [First Embodiment]

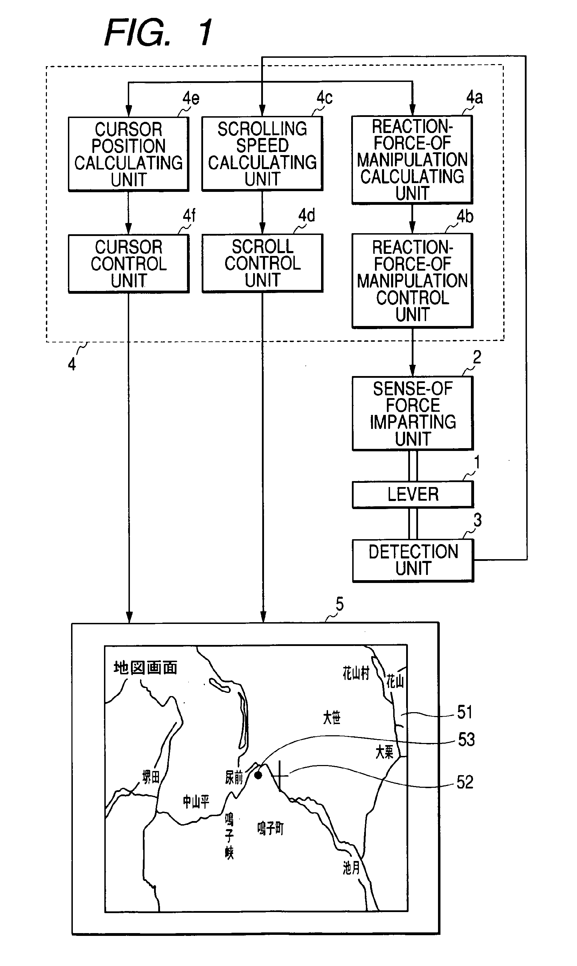

Referring first to Fig. 1, a first embodiment of the sense of force imparting input/output apparatus according to the present invention will be described. Fig. 1 is a block diagram showing the construction of the first embodiment.

The first embodiment may be employed, for example, in a car navigation system. The first embodiment includes, as shown in Fig. 1, an operating member to be operated manually, for example, a lever 1 provided so as to be capable of tilting in directions of 360-degrees, and detecting means 3 for detecting a tilt direction and a tilt angle of the joy stick 1, for example, by a potentiometer and outputting a detection signal indicating the tilt direction and the tilt angle. The first embodiment also includes sense-of-force imparting means 2 for imparting a reaction force of manipulation to the lever 1, for example, by a motor, display means 5 for displaying, for example, a map screen 51, as a display screen, and control means for controlling the sense-of-force imparting means 2 and the display means 5 according to a detection signal, that is, a CPU 4.

The CPU 4 includes a reaction-force-of-manipulation calculating unit 4a for calculating a reaction force of manipulation in the direction opposite from the tilt direction based on the tilt direction and the tilt angle of the lever 1 so as to increase with the tilt angle. The CPU 4 also includes a reaction-force-of-manipulation control unit 4b for setting a reaction-force-of-manipulation control signal for activating the sense-of-force imparting means 2 based on the reaction force of manipulation calculated by the reaction-force-of-manipulation calculating unit 4a and outputting the same to the sense-of-force imparting means 2.

The CPU 4 further includes a scrolling speed calculating unit 4c for calculating a scrolling direction corresponding to the tilt direction and a scrolling speed of corresponding to the tilt angle, that is, a scrolling speed, based on the detection signal. 'The CPU 4 further includes a scroll control unit 4d for setting a scroll control signal for activating the display means 5 so that the map screen 51 is scrolled at a scrolling speed calculated by the scrolling speed calculating unit 4c and outputs the same to the display means 5.

The scrolling speed calculating unit 4c is adapted, for example, to calculate a scrolling speed so as to increase with the tilt angle.

The display means 5 is adapted to display a cursor 52 which moves in the map screen 51. The CPU 4 includes a cursor position calculating unit 4e for calculating a position of the cursor 52 corresponding to the tilt direction and the tilt angle with respect to the center 53 of the map screen 51. The CPU 4 also includes a cursor control unit 4f for setting a cursor control signal for activating the display means 5 so as to display the cursor 52 at a cursor 52 position calculated by the cursor position calculating unit 4e and outputs the same to the display means 5.

The operation of the first embodiment in this arrangement will be described.

When the tilt angle of the lever 1 in a given direction is in the course of change, the detecting means 3 detects the given tilt direction as a tilt direction of the lever 1, and detects the tilt angle every second in the course of change, and outputs a detection signal indicating the given tilt direction and the tilt angle to the CPU 4 in response to the detection of the tilt angle.

In the CPU 4, in response to detection signal, the reaction-force-of-manipulation calculating unit 4a calculates the magnitude of the reaction force of manipulation corresponding to the tilt angle in the direction opposite from the given tilt direction. When the tilt angle indicated by the detection signal increases each time when the detection signal is input to the control means, the magnitude of the reaction force of manipulation calculated by the reaction-force-of-manipulation calculating unit 4a increases each time when it is calculated. When the tilt angle indicated by the detection signal decreases each time when the detection signal is input to the control means, the magnitude of the reaction force of manipulation calculated by the reaction-force-of-manipulation calculating unit 4a decreases each time when it is calculated. Then, the reaction-force-of-manipulation control unit 4b sets a reaction-force-of-manipulation control signal corresponding to the calculated reaction force of manipulation each time when the reaction-force-of-manipulation calculating unit 4a calculates the reaction force of manipulation, and outputs the same to the sense-of-force imparting means 2.

The sense-of-force imparting means 2 is activated according to the reaction-force-of-manipulation control signal in response to the input thereof. Accordingly, when the tilt angle of the lever 1 in the given tilt direction is in the course of increase, a reaction force of manipulation in the direction opposite from the given tilt angle increases in conjunction with increase in the tilt angle, and thus the magnitude of the reaction force of manipulation reaches the maximum value when the lever 1 is moved to the limit, that is, when tilted in a possible maximum angle. When the tilt angle of the lever 1 in the given tilt direction is in the course of decrease, the reaction force of manipulation in the direction opposite from the given tilt direction decreases in conjunction with decrease in the tilt angle, and hence no reaction force of manipulation is imparted to the lever 1 when the lever 1 is returned to the neutral position, that is, when the tilt angle becomes zero.

The CPU 4 performs control of the scrolling motion of the map screen 51, simultaneously with control of reaction-force-of-manipulation described above. The scrolling speed calculating unit 4c calculates a scrolling direction corresponding to the given tilt direction and a scrolling speed of corresponding to the tilt angle, that is, the scrolling speed, in response to the input of the detection signal into the CPU 4. In this case, when the tilt angle indicated by the detection signal increases each time when the detection signal is input to the CPU 4, the scrolling speed calculated by the scrolling speed calculating unit 4c increases each time when it is calculated. When the tilt angle indicated by the detection signal reduces each time when the detection signal is input to the CPU 4, the scrolling speed calculated by the scrolling speed calculating unit 4c decreases each time when it is calculated. Then, each time when the scrolling speed calculating unit 4c calculates the scrolling speed, the scroll control unit 4d sets a scroll control signal corresponding to the calculated scrolling speed and outputs the same to the display means 5.

Then, the display means 5 is activated according to the scroll control signal in response to the input thereof. Accordingly, the map screen 51 is scrolled in a direction corresponding to the given tilt direction of the lever 1 at a speed corresponding to the tilt angle. In other words, when the tilt angle of the lever 1 in the given tilt direction is in the course of increase, the scrolling motion of the map screen 51 in a direction corresponding to the given tilt direction is accelerated in conjunction with increase in the tilt angle, and thus the scrolling speed reaches the maximum value when the lever 1 is moved to the maximum operating position. In contrast, when the tilt angle of the lever 1 in the given tilt direction is decreasing, the scrolling motion of the map screen 51 in a direction corresponding to the given tilt direction is decelerated in conjunction with decrease in the tilt angle, and thus scrolling is halted when the lever 1 reaches the neutral position.

The CPU 4 performs control of the cursor position simultaneously with the above-described control of the reaction force of manipulation and the above-described control of the scrolling motion of the map screen 51. In other words, the cursor position calculating unit 4e calculates the position of the cursor 52 corresponding to the tilt angle in the track corresponding to the given tilt direction each time when the detection signal is entered into the CPU 4. In other words, when the tilt angle indicated by the detection signal increases each time when the detection signal is input to the control signal, the position of the cursor 52 calculated by the cursor position calculating unit 4e moves away from the center 53 of the map screen 51 on a track corresponding to the given tilt direction in response to calculation. On the other hand, when the tilt angle indicated by the detection signal decreases each time when the detection signal is input to the control signal, the position of the cursor 52 calculated by the cursor position calculating unit 4e moves toward the center 53 of the map screen 51 on a track corresponding to the given tilt angle each time when it is calculated. Then, each time when the cursor position calculating unit 4e calculates the position of the cursor 52, the cursor control unit 4f sets a cursor control signal corresponding to the calculated position of the cursor 52 and outputs the same to the display means 5.

The display means 5 is activated according to the cursor control signal in response to the input thereof. Accordingly, the cursor 52 moves on a track corresponding to the given tilt direction of the lever 1 in conjunction with changes in the tilt angle. In other words, when the tilt angle of the lever 1 in the given tilt direction is in the course of increase, the cursor 52 moves away from the center 53 of the map screen 51 on a track corresponding to the given tilt direction in conjunction with increase in the tilt angle, and reaches the edge of the map screen 51 when the lever 1 is moved to the maximum operation position. When the tilt angle of the lever 1 in the given tilt direction is in the course of decrease, the cursor 52 is moved toward the center 53 of the map screen 51 on a track corresponding to the given tilt direction in conjunction with decrease in the tilt angle, and thus the cursor 52 reaches the center 53 of the map screen 51 when the lever 1 reaches the neutral position.

When the tilt angle of the lever 1 in the given tilt direction is held at the given tilt angle, the cursor 52 stops at the position corresponding to the given tilt angle on a track corresponding to the given tilt direction. At this time, the magnitude of the reaction force of manipulation in the direction opposite from the given tilt direction is maintained at a magnitude corresponding to the given tilt angle and the scrolling speed of the map screen 51 in a direction corresponding to the given tilt direction is also maintained at a speed corresponding to the given tilt angle.

When an operation force is no longer exerted on the lever 1 in the tilted state, the lever 1 is restored automatically. In other word, the lever 1 starts its restoring action by the reaction force of manipulation applied at the time when the operation force was stopped being applied to the lever 1. Then, when the tilt angle decreases with the start of the restoring motion, a reaction force of manipulation of a magnitude corresponding to the decreased tilt angle is imparted to the lever 1, whereby the restoring motion of the lever 1 progresses. Then, the lever 1 reaches the neutral position after the restoring motion and imparting of the reaction force of manipulation are repeated. At this moment, being free from exertion of the reaction force of manipulation, the lever 1 stops and hence the automatic restoration is completed.

While the lever 1 is in automatic restoration, the scrolling speed of the map screen 51 is reduced, and the cursor 52 moves toward the center 53 of the map screen 51. When the lever 1 stops at the neutral position, the scrolling motion of the map screen 51 is halted, and the cursor 52 stops at the center 53 of the map screen 51.

The first embodiment has following advantages.

According to the first embodiment, the magnitude of the reaction force of manipulation and the scrolling speed increase in conjunction with increase in the tilt angle of the lever 1, and the magnitude of the reaction force of manipulation and the scrolling speed decrease in conjunction with decrease in the tilt angle of the lever 1. In other words, the magnitude of the resistance force which the operator receives from the lever 1 (sense of force) corresponds to the scrolling speed. Therefore, the operator can adjust the scrolling speed of the map screen 51 by adjusting the operating force exerted on the lever 1, whereby the operator can scroll the map screen 51 at a desired speed.

According to the first embodiment, since the scrolling speed corresponds to the position of the cursor 52 with respect to the center 53 of the map screen 51, the operator can utilize the cursor 52 as an index of the scrolling speed, whereby improvement of operability in adjusting the scrolling speed of the map screen 51 is achieved.

Since the display screen, which is an object to be operated, is the map screen 51 displayed by a car navigation system in the first embodiment, the operating member is the lever 1. However, the present invention is not limited thereto. In other words, in a case in which the object to be operated is a screen displayed on a personal computer, the operating member may be a wheel provided on a mouse. The wheel in this case has a neutral position and a maximum operating position set in advance.

In this arrangement, the magnitude of the reaction force of manipulation imparted on the wheel and the scrolling speed of the screen pages increase in conjunction with increase in the rotational angle of the wheel, and when the wheel reaches the maximum operating position, the magnitude of the reaction force of manipulation and the scrolling speed are maximized. On the other hand, the magnitude of the reaction force of manipulation to be imparted on the wheel and the scrolling speed of the screen pages decrease in conjunction with decrease in the rotational angle of the wheel, and when the wheel reaches the neutral position, the reaction force of manipulation stops being imparted to the wheel and the scrolling motion of the screen pages is halted.

Therefore, in the case in which the operating member is a wheel, the scrolling speed of the screen pages may be adjusted by adjusting the operating force to be exerted on the wheel as in the case of the first embodiment, whereby the screen displayed on the personal computer may be scrolled at a desired speed.

The first embodiment is constructed in such a manner that the scrolling motion is accelerated in conjunction with increase in the operating force, that is, as the operator increases the operating force, because the screen pages to be operated is the map screen 51, which is scrolled from the halted state, and the operator tends to operate the lever at an operating force stronger than necessary in order to scroll unnecessary screen pages quickly. However, the present invention is not limited thereto. In other words, it may be constructed in such a manner that the scrolling speed is decelerated in conjunction with increase in the reaction force of manipulation. Accordingly, when the operator decelerates the scrolling motion of screen from the scrolling state and brings into halt, the operator can use the operating member as a brake for decelerating and halting the scrolling motion.

According to the first embodiment, the scrolling speed calculating unit 4c is adapted to perform calculation of the scrolling speed based on the detection signal from the detection means 3. However the present invention is not limited thereto, and may be constructed in such a manner that calculation of the scrolling speed is performed by the scrolling speed calculating unit 4c based on the reaction force of manipulation calculated by the reaction force of manipulation calculating unit 4a, that is, based on the direction and the magnitude of the reaction force of manipulation.

### [Second Embodiment]

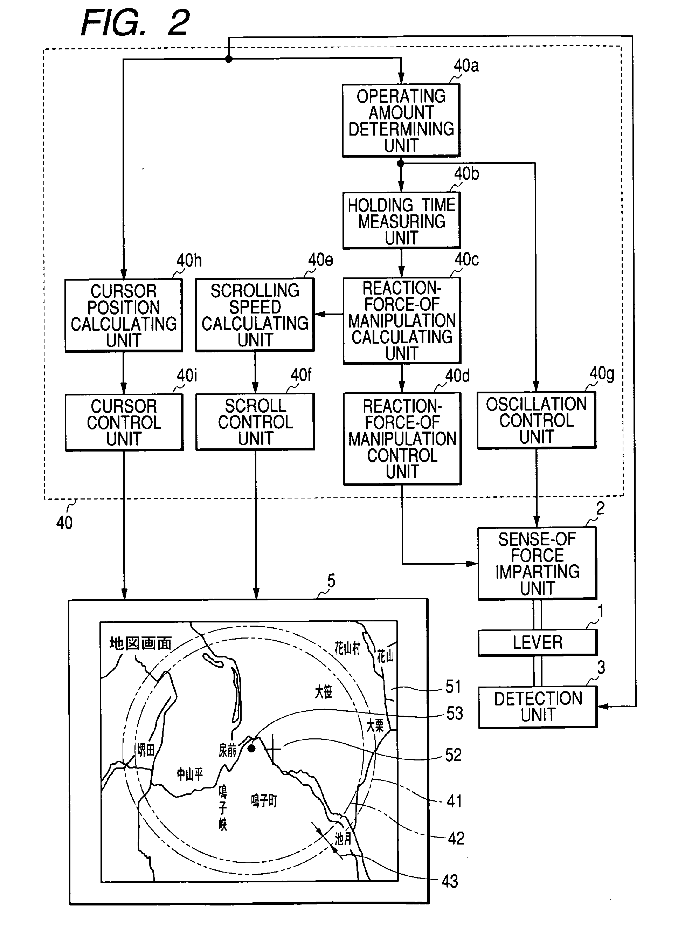

Referring now to Fig. 2, a second embodiment will be described.

Fig. 2 is a block diagram showing the construction of the second embodiment. In Fig. 2, the same parts are represented by the same reference numerals as those in Fig. 1.

The second embodiment includes a CPU 40, which differs from the first embodiment.

The CPU 40 includes an amount of operation determining unit 40a for determining whether the tilt angle indicated by the detection signal is the tilt angle at the maximum operating position, that is, the maximum tilt angle (hereinafter, referred to as "first tilt angle", the tilt angle smaller than the first tilt angle (hereinafter, referred to as "second tilt angle"), or an angle between the first tilt angle and the second tilt angle. The amount of operation determining unit 40a is adapted not to determine whether the tilt angle is the second tilt angle or an angle between the first tilt angle and the second tilt angle until the level 1 is operated from the neutral position and the tilt angle reaches the first tilt angle.

The CPU 40 includes a holding time measuring unit 40b for measuring the period during which the tilt angle is held at the first tilt angle when it is determined by the amount of operation determining unit 40a to be in the first tilt angle, and measuring the period during which the tilt angle is held at the second tilt angle when it is determined that the tilt angle is the second tilt angle.

The CPU 40 includes a reaction-force-of- manipulation calculating unit 40c for performing arithmetic operation for calculating the first reaction force of manipulation based on the tilt angle determined by the amount of operation determining unit 40a, the time period determined by the holding time measuring unit 40b, and the tilt direction indicated by the detection signal.

The reaction-force-of-manipulation calculating unit 40c is constructed in such a manner that when the tilt angle is determined to be the first tilt angle and a predetermined time period has elapsed in a state in which the tilt angle is held at the first tilt angle, the first reaction force of manipulation is calculated so as to increase with the length of time period during which the tilt angle is held at the first tilt angle. It is also constructed in such a manner that when it is determined that the tilt angle has changed after having determined to be the first tilt angle and then reached the second tilt angle and a predetermined time period has elapsed in a state in which the tilt angle is held at the second tilt angle, the first reaction force of manipulation is calculated so as to decrease with respect to first reaction force of manipulation obtained at the time when the tilt angle reached the second tilt angle as the length of the time period during which the tilt angle is held at the second tilt angle increases. It is also constructed in such a manner that when it is determined that the tilt angle has changed after having determined to be the first tilt angle and reached to a value within the range between the first tilt angle and the second tilt angle, the first reaction force of manipulation which corresponds to the first reaction force of manipulation obtained at the time when the tilt angle fell within the range between the first tilt angle and the second tilt angle is calculated.

The reaction-force-of-manipulation calculating unit 40c is adapted to calculate a predetermined second reaction force of manipulation according to the tilt angle until a predetermined time has elapsed since the tilt angle of the lever 1 increased from 0 degree (neutral position) and is determined to be the first tilt angle by the amount of operation determining unit 40a. The reaction-force-of-manipulation calculating unit 40c is also adapted to calculate the second reaction force of manipulation according to the tilt angle even in a state in which the predetermined time has elapsed since the tilt angle of the lever 1 is determined to be the first tilt angle by the amount of operation determining unit 40a, and the tilt angle is decreased to a value smaller than the second tilt angle. The magnitude of the f irst reaction force of manipulation is set to a minimum value, and the minimum value is set to a value slightly larger than the second reaction force of manipulation.

The CPU 40 includes a reaction-force-of-manipulation control unit 40d for setting a first reaction-force-of-manipulation control signal and a second reaction-force-of-manipulation control signal respectively for activating the sense-of-force imparting means 2 based respectively on the first reaction force of manipulation and the second reaction force of manipulation calculated by the reaction-force-of-manipulation calculating unit 40, and outputting the same to the sense-of-force imparting means 2.

The CPU 40 includes a scrolling speed calculating unit 40e for performing arithmetic operation based on the reaction force of manipulation calculated by the reaction-force-of-manipulation calculating unit 40c, and calculating the direction of scrolling the map screen 51 corresponding to the tilt direction of the lever 1 and the scrolling speed corresponding to the magnitude of the reaction force of manipulation imparted to the lever 1, that is, calculating the scrolling speed of the map screen 51.

The scrolling speed calculating unit 40e is adapted to calculate the increased scrolling speed with increases of the first reaction force calculated by the reaction force of manipulation calculating unit 40d.

The CPU 40 includes a scroll control unit 40f for setting a scroll control signal for activating the display means 5 so that the map screen 51 is scrolled at a scrolling speed calculated by the scrolling speed calculating unit 40e, and outputting the same to the display means 5.

The CPU 40 also includes an oscillation control unit 40g for outputting an oscillation control signal for activating the sense-of-force imparting means 2 to make the lever 1 oscillate when the tilt angle is determined to be the first tilt angle, and when the tilt angle is determined to be the second tilt angle by means of the amount of operation determining unit 40a. The oscillating control signal is outputted for a predetermined time period from a moment when the lever 1 reached the first tilt angle and at the time when the lever reached the second tilt angle in a state in which the tilt angle of the lever 1 is maintained at the second tilt angle, and stops when the tilt angle is deviated from the first tilt angle and the first and second tilt angles before the predetermined time period is elapsed.

The CPU 40 further includes a cursor position calculating unit 40h for performing arithmetic operation for calculating the position of the cursor 52 corresponding to the tilt direction and the tilt angle indicated by the detection signal with reference to the center 53 of the map screen 51. The CPU 40 also includes a cursor control unit 40i for setting a cursor control signal for activating the display unit 5 so that the cursor 52 is displayed at the cursor 52 position calculated by the cursor position calculating unit 40h, and outputting the same to the display means 5.

The cursor 52 is adapted to be displayed in an external circle 41 which is shown by an imaginary chain double-dashed line on the display screen 51 when the tilt angle of the lever 1 reached the first tilt angle. The cursor 52 is also adapted to be displayed in an internal circle 42 shown by an imaginary chain double-dashed line on the map screen 51 when the tilt angle of the lever 1 reached the second tilt angle. The cursor 52 is further adapted to be displayed within a range 43 between the internal circle 42 and the external circle 41 when the tilt angle of the lever 1 fell within the range between the first tilt angle and the second tilt angle.

The operation of the second embodiment in this arrangement will be described.

When the tilt angle in the given tilt direction of the lever 1 is in the course of change, the detection means 3 detects the given tilt direction as the tilt direction of the lever 1, and detects the tilt angle being changed every second, and a detection signal indicating the given tilt direction and the tilt angle is outputted to the CPU 40 in response to the detection of the tilt angle.

Accordingly, the CPU 40 calculates the position of the cursor 52 corresponding to the tilt angle on a track corresponding to the given tilt direction by means of the cursor position calculating unit 40h in response to the reception of the detection signal. In this case, when the tilt angle indicated by the detection signal increase each time when the detection signal is entered to the CPU 40, the position of the cursor 52 calculated by the cursor position calculating unit 40h moves away from the center 53 of the map screen 51 on a track corresponding to the given tilt direction each time when it is calculated. When the tilt angle indicated by the detection signal decreases each time when the detection signal is entered to the CPU 40, the position of the cursor 52 calculated by the cursor position calculating unit 40h moves toward the center 53 of the map screen 51 on a track corresponding to the given tilt direction each time when it is calculated. Then, each time when the position of the cursor 52 is calculated by the cursor position calculating unit 40h, the cursor control unit 40i sets a cursor control signal corresponding to the calculated position of the cursor 52 and outputs the same to the display means 5.

Then, the display unit 5 is activated based on the cursor control signal in response to every reception thereof. Accordingly, the cursor 52 moves on a track corresponding to the given tilt direction in conjunction with changes in the tilt angle of the lever 1 in the given tilt direction, and when the lever 1 reached the maximum operating position, that is, when the tilt angle reached the first tilt angle, the cursor 52 is displayed in the external circle 41. When the tilt angle of the lever 1 in the given tilt direction is the second tilt angle, the cursor 52 is displayed in the internal circle 42.

The CPU 40 performs control of the reaction force of manipulation simultaneously with control of the cursor 52 position. In other words, when the tilting operation of the lever 1 from the neutral position in the given tilt direction starts, the amount of operation determining unit 40a determines whether or not the tilt angle of the lever 1 is the first tilt angle in response to the input of the detection signal to the CPU 40. Until the tilt angle indicated by the detection signal reaches the first tilt angle, the tilt angle of the lever 1 is determined not to be the first tilt angle. Each time when the amount of operation determining unit 40b determines that the tilt angle is not the first tilt angle, the reaction-force-of-manipulation calculating unit 40c calculates the second reaction-force-of manipulation. Then, each time when the reaction-force-of-manipulation calculating unit 40c calculates the second reaction force of manipulation, the reaction-force-of-manipulation control unit 40c sets a second reaction-force-of-manipulation signal and outputs the same to the sense-of-force imparting means 2.

Then, the sense-of-force imparting means 2 is activated based on the second reaction-force-of-manipulation control signal in response to the input of the second reaction-force-of-manipulation signal. Accordingly, in a state in which the operation of the lever 1 from the neutral position in the given tilt direction is started and the tilt angle does not reach the first tilt angle, the second reaction force of manipulation is continuously imparted to the lever 1 according to the tilt angle.

In the state in which the tilt angle of the lever 1 in the given tilt direction does not reach the first tilt angle as described above, arithmetic operation for calculating the second reaction force of manipulation by the reaction-force-of-manipulation calculating unit 40c is in execution while arithmetic operation for calculating the first reaction force of manipulation is not performed. Therefore, since the scrolling speed calculating unit 40e does not perform arithmetic operation of the scrolling speed, the scrolling motion of the map screen 51 is halted.

When the tilt angle of the lever reaches the first tilt angle, and the detecting means 3 detects the first tilt angle and outputs the same to the CPU 40, the CPU 40 determines that the tilt angle indicated by the detection signal is the first tilt angle by means of the amount of operation determining unit 40a. Accordingly, the oscillation control unit 40g is activated and the oscillation control signal is outputted to the sense-of-force imparting means 2, and the holding time measuring unit 40b starts measurement of time period during which the tilt angle is held at the first tilt angle.

Assuming that the tilt angle is held at the first tilt angle for time period longer than the predetermined time period, the oscillation control signals are continuously outputted for a predetermined time from the moment when the tilt angle reaches the first tilt angle.

The sense-of-force imparting means 2 is activated by the oscillation control signal, whereby the lever 1 oscillates for the predetermined time period. Since the lever 1 is imparted with the second reaction-force-of-manipulation as described above, the lever 1 oscillates while being imparted with the second reaction force of manipulation.

During this time, the holding time measuring unit 40b measures time during which the tilt angle is held at the first tilt angle every second. Then, when a predetermined time period has elapsed since the tilt angle have reached the first tilt angle, the reaction-force-of-manipulation calculating unit 40c calculates a reaction force of manipulation which increases with the length of time during which the tilt angle is held at the first tilt angle. In other words, at the time when the predetermined time period has elapsed since the tilt angle have reached the first tilt angle, a minimum first reaction force of manipulation which is slightly larger than the second reaction force of manipulation is calculated, and then the reaction force is calculated so as to increase with the length of time period during which the tilt angle is held at the first tilt angle. Each time when the reaction-force-of-manipulation calculating unit 40c calculates the first reaction force of manipulation, the reaction-force-of-manipulation control unit 40d sets a first reaction-force-of-manipulation control signal corresponding to the calculated first reaction force of manipulation and outputs the same to the sense-of-force imparting means 2.

Then, the sense-of-force imparting means 2 is activated based on the first reaction force of operation control signal in response to the input of the first reaction-force-of-manipulation control signal. Accordingly, when a predetermined time is elapsed since the tilt angle of the lever 1 in the given tilt direction reached the first tilt angle, the first reaction force of manipulation in the direction opposite from the given direction increases with elapse of time from then on.

When the tilt angle of the lever 1 is returned to the range between the first tilt angle and the second tilt angle and changing in this range while the first reaction-force-of-manipulation is in the course of increase, the detecting means 3 detects the tilt angle in the course of changing in the range every second, and the detection signal is outputted to the CPU 40 in response to detection of the tilt angle.

Then, the CPU 40 determines that the tilt angle indicated by the detection signal falls within the range between the first tilt angle and the second tilt angle by means of the amount of operation determining unit 40a. Then each time when the amount of operation determining unit 40a determines that the tilt angle falls within the range between the first tilt angle and the second tilt angle, a reaction force of manipulation which corresponds to the first reaction force of manipulation obtained at the time when the tilt angle reached the range between the first tilt angle and the second tilt angle is calculated by the reaction-force of-manipulation calculating unit 40c. Then, each time when the reaction-force-of-manipulation calculating unit 40c calculates the first reaction force of manipulation, the reaction-force-of manipulation control unit 40d sets a first reaction-force-of-manipulation corresponding to the calculated first reaction force of manipulation and outputs the same to the sense-of-force imparting means 2.

The sense-of-force imparting means 2 is activated based on the first reaction-force-of-manipulation control signal in response to the input of the first reaction-force-of-manipulation control signal. Consequently, the first reaction force of manipulation is maintained at the first reaction force of manipulation obtained at the time when the tilt angle fell into the range between the first tilt angle and the second tilt angle.

When the tilt angle of the lever 1 is changing within the range between the first tilt angle and the second tilt angle, the cursor 52 moves within the range 43 on a track corresponding to the given tilt direction.

Then, when the tilt angle of the lever 1 is returned to the second tilt angle in a state in which the first reaction force of manipulation is held in this manner, the detecting means 3 detects the second tilt angle, and the detection signal is outputted to the CPU 40.

Then, the CPU 40 determines that the tilt angle indicated by the detection signal is the second tilt angle by means of the amount of operation determining unit 40a. Accordingly, the oscillation control unit 40g is activated by the holding time measuring unit 40b, and the oscillation control signal is outputted to the sense-of-force imparting means 2 and, simultaneously, the measurement of time period during which the tilt angle is held at the second tilt angle starts.

For example, assuming that the tilt angle is held at the second tilt angle for time period longer than the predetermined time period, the oscillation control signals are continuously outputted for a predetermined time period from the moment when the tilt angle reached the second tilt angle.

Then, the sense-of-force imparting means 2 is activated based on the oscillation control signal, whereby the lever 1 oscillates for a predetermined time period. Since the first reaction force of manipulation is imparted to the lever 1 as described above, the lever 1 oscillates while being imparted with the first reaction force of manipulation.

During this period, the holding time measuring unit 40b measures time period during which the tilt angle is held at the second tilt angle every second. When a predetermined time period has elapsed after the tilt angle has reached the second tilt angle, the reaction-force-of-manipulation calculating unit 40c calculates the first reaction force of manipulation so as to decrease with respect to the first reaction force of manipulation at the time when the tilt angle reached the second tilt angle as the length of time period during which the tilt angle is held at the second tilt angle increases. Then, each time when the reaction-force-of-manipulation calculating unit 40c calculates the first reaction force of manipulation, the reaction-force-of-manipulation control unit 40d sets a first reaction-force-of-manipulation control signal corresponding to the calculated first reaction force of manipulation and outputs the same to the sense-of-force imparting means 2.

Then, the sense-of-force imparting means 2 is activated based on the first reaction-force-of-manipulation control signal in response to the reception thereof. Accordingly, when a predetermined time period has elapsed after the tilt angle of the lever 1 in the given tilt direction has reached the second tilt angle, the first reaction force of manipulation in the direction opposite from the given tilt direction decreases with elapse of time from then on.

When the tilt angle of the lever 1 is the second tilt angle, the cursor 52 is positioned in the internal circle 42 on a track corresponding to the given tilt direction.

Even when the tilt angle of the lever falls within the range between the first tilt angle and the second tilt angle when the first reaction force of manipulation is in the course of decrease, the first reaction force of manipulation at that moment is maintained.

The CPU 40 performs control of the scrolling motion on the map screen 51 simultaneously with the control of the reaction force of manipulation and the control of the cursor 52 position. In other words, each time when the scrolling speed calculating unit 40e calculates the first reaction force of manipulation, the scrolling direction corresponding to the given tilt direction and the speed of scrolling corresponding to the magnitude of the reaction force of manipulation, that is, the scrolling speed are calculated based on the calculated first reaction force of manipulation. In other words, when the first reaction force of manipulation calculated by the reaction-force-of-manipulation calculating unit 40c increase at each calculation, the scrolling speed calculated by the scrolling speed calculating unit 40e increases at each calculation. When the first reaction force of manipulation calculated by the reaction-force-of-manipulation calculating unit 40c decreases at each calculation, the scrolling speed calculated by the scrolling speed calculating unit 40e decreases at each calculation. Then, each time when the scrolling speed calculating unit 40e calculates the scrolling speed, the scrolling control unit 40f sets a scroll control signal corresponding to the calculated scrolling speed, and outputs the same to the display unit 5.

Then, the display means 5 is activated based on the scroll control signal in response to the reception thereof. Accordingly, the map screen 51 is scrolled in a direction corresponding to the given tilt direction of the lever 1 at a speed corresponding to the magnitude of the first reaction force of manipulation in the direction opposite from the given tilt direction. In other words, when the first reaction force of manipulation in the direction opposite from the given tilt direction is in the course of increase, the scrolling motion in a direction corresponding to the given tilt direction is accelerated in conjunction with increase in the first reaction force of manipulation. When the first reaction force of operation in a direction opposite from the given tilt direction is in the course of decrease, the scrolling motion in a direction corresponding to the given tilt direction is decelerated in conjunction with decrease in the first reaction force of manipulation. When the first reaction force of manipulation in the direction opposite from the given tilt direction is maintained, the scrolling speed in a direction corresponding to the given tilt direction is maintained.

When the operation force is no longer exerted to the lever 1 in a state in which the first reaction force of manipulation is imparted on the lever 1, the lever 1 is restored automatically until the tilt angle thereof is reduced to the value smaller than the second tilt angle by the first reaction force of manipulation. From the moment when the tilt angle drops below the second tilt angle, the lever 1 is restored automatically by the second reaction force of manipulation. When the lever 1 reaches the neutral position, being free from the second reaction force of manipulation, the lever 1 stops.

During this period, the scrolling motion of the map screen 51 stops when the tilt angle of the lever 1 drops below the second tilt angle. The cursor 52 moves toward the center 53 of the map screen 51 in conjunction with the automatic restoration of the lever 1, and when the lever 1 reaches the neutral position, the cursor 52 reaches the center 53 of the map screen 51 and stops.

The second embodiment has the following advantages.

According to the second embodiment, when a predetermined time period has elapsed since the tilt angle of the lever 1 is held at the first tilt angle, the reaction force of manipulation increases with elapse of time from then on, and correspondingly the scrolling motion is accelerated. When a predetermined time period has elapse since the tilt angle of the lever is held at the second tilt angle, the first reaction force of manipulation decreases with elapse of time from then on, and correspondingly, the scrolling motion is decelerated. In a state in which the tilt angle of the lever 1 is held in the range between the first tilt angle and the second tilt angle, the first reaction force of manipulation obtained at the time when the tilt angle fell within the range is maintained, and the scrolling speed is also maintained at a value obtained at the same moment. In other words, the magnitude of the resistance force (sense of force) that the operator receives from the lever 1 corresponds to the scrolling speed. Therefore, the operator can adjust the scrolling speed of the map screen 51 by adjusting the operating force to be exerted on the lever 1, whereby the operator can scroll the map screen 51 at a desired speed.

According to the second embodiment, the lever oscillates when the tilt angle of the lever 1 is held at the first tilt angle and when the lever 1 is held at the second tilt angle. Therefore, the first tilt angle and the second tilt angle may be recognized from oscillation (sense of force) of the lever 1, whereby improvement of operability in adjusting the scrolling speed is achieved.

Since the display screen to be operated is a map screen 51 displayed by a car navigation system in the second embodiment, the operating member is the lever 1. However, the present invention is not limited thereto. In other words, in a case in which the object to be operated is a screen displayed on a personal computer, the operating member may be a wheel provided on a mouse. The wheel in this case has a neutral position and a maximum operating position set in advance.

In this arrangement, the reaction force of manipulation increases with elapse of time after the wheel is held at the maximum rotational angle (maximum operating position) and a predetermined time period has elapsed, and the scrolling motion of the screen pages is accelerated in conjunction therewith. When the rotational angle is returned to a predetermined rotational angle after the reaction force of manipulation is imparted on the wheel, the reaction force of manipulation decreases with elapse of time after the rotational angle is held at a predetermined angel and a predetermined time period has elapsed, and the scrolling motion of the screen pages is decelerated in conjunction therewith. In a state in which the rotational angle of the wheel is held at a magnitude in the range between the maximum rotational angle and a predetermined rotational angle, the reaction force of manipulation is held at a value obtained when the rotational angle fell within the range.

Therefore, even with the input/output apparatus employing a wheel as an operating member, the scrolling speed of the screen pages may be adjusted by the operator by adjusting the operating force to be exerted on the wheel, whereby the screen displayed on the personal computer may be scrolled at a desired speed.

Although the second embodiment is adapted in such a manner that the scrolling motion is accelerated in conjunction with increase in the reaction force of manipulation since the object to be operated is the map screen 51 and it is required to scroll unnecessary screen pages quickly, the present invention is not limited thereto, and it may be adapted in such a manner that the scrolling motion is decelerated in conjunction with increase in the reaction force of manipulation depending on the contents displayed on the screen.

According to the first and the second embodiment, the detecting means 3 detects the direction of operation and the amount of operation of the lever 1 by means of a potentiometer. However, the present invention is not limited thereto, and the detecting means may be adapted to detect the direction of operation and the amount of operation of the lever 1 by means of an encoder.

As described thus far, according to the invention stated relating to the respective claims, since the magnitude of the resistance force (sense of force) that the operator receives from the operating member corresponds to the scrolling speed, the operator can adjust the scrolling speed by adjusting the operating force to be exerted on the operating member, thereby scrolling the screen pages at a desired speed.

Specifically, according to the invention of Claim 3, in addition to the invention of Claim 1, the operator can use the cursor as an index of the scrolling speed, whereby improvement of operability in adjusting the scrolling speed is achieved.

Specifically, according to the invention of Claim 5, in addition to the invention of Claim 4, since the operating member oscillates when the operating member is held at the first amount of operation and when the operating member is held at the second amount of operation, the operator can recognize the first amount of operation and the second amount of operation from oscillation of the operating member (sense of force), whereby improvement of operability in adjusting the scrolling speed is achieved.

## Claims

1. A sense of force imparting input/output apparatus comprising:
an operating member to be operated manually;
detecting means for detecting the operating direction and the amount of operation of the operating member and outputting a detection signal indicating the operating direction and the amount of operation;
sense-of-force imparting means for imparting a reaction force of manipulation to the operating member;
display means for displaying screen pages; and
control means for controlling the sense-of-force imparting means and the display means so that the reaction force of manipulation corresponds to the scrolling speed according to the operating direction and the amount of operation indicated by the detection signal, wherein the control means comprises:
a reaction-force-of-manipulation calculating unit for performing an arithmetical operation for calculating the direction of the reaction force of manipulation corresponding to the operating direction and the magnitude of the reaction force of manipulation corresponding to the amount of operation, the reaction-force-of-manipulation calculating unit calculating the reaction force of manipulation so as to increase with the amount of operation;
a reaction-force-of-manipulation control unit for setting a reaction force of manipulation control signal for making the sense-of-force imparting means operate based on the reaction force of manipulation calculated by the reaction-force-of-manipulation calculating unit and outputting the reaction force of manipulation control signal to the sense-of-force imparting means;
a scrolling speed calculating unit for calculating the scrolling direction corresponding to the operating direction and the scrolling speed corresponding to the amount of operation; and
a scroll control unit for setting a scroll control signal for making the display means operate so that the display pages are scrolled at the speed calculated by the scrolling speed calculating unit and outputting the scroll control signal to the display means.

2. A sense of force imparting input/output apparatus according to Claim 1, wherein the scrolling speed calculating unit is adapted to calculate the scrolling speed so as to increase with the reaction force of manipulation calculated by the reaction-force-of-manipulation calculating unit.

3. A sense of force imparting input/output apparatus according to Claim 1 or 2, wherein the operating member is provided with a neutral position, the operating member is provided so as to be capable of tilting in directions of 360-degrees from the neutral position, the display means is adapted to display a cursor moving on the screen, and the control means includes a cursor position calculating unit for performing an arithmetical operation for calculating the position of the cursor corresponding to the tilt direction and the tilt angle with respect to the center of the screen, and a cursor control unit for setting a cursor control signal for operating the display means so that the cursor is displayed at the cursor position which is calculated by the cursor position calculating unit.

4. A sense of force imparting input/output apparatus comprising:
an operating member to be operated manually;
detecting means for detecting the operating direction and the amount of operation of the operating member and outputting a detection signal indicating the operating direction and the amount of operation;
sense-of-force imparting means for imparting a reaction force of manipulation to the operating member;
display means for displaying screen pages; and
control means for controlling the sense-of-force imparting means and the display means so that the reaction force of manipulation corresponds to the scrolling speed according to the operating direction and the amount of operation detected by the detection signal, wherein the control means includes:
an amount of operation determining unit for determining whether the amount of operation is a predetermined first amount of operation, a predetermined second amount of operation which is smaller than the first amount of operation, or an amount in the range between the first amount of operation and the second amount of operation;
a holding time measuring unit for measuring a time period during which the amount of operation is maintained when the amount of operation determining unit determined that the amount of operation was the first amount of operation and the second amount of operation;
a reaction-force-of-manipulation calculating unit for calculating the operating reaction force based on the on the amount of operation determined by operation determining unit, time period measured by the holding time measuring unit and the operating direction indicated by the detection signal, the reaction-force-of-manipulation calculating unit being constructed in such a manner that when the amount of operation is determined to be the first amount of operation, the reaction force of manipulation is calculated so as to increase with the length of time period during which the amount of operation is held at the first amount of operation, that when it is determined that the amount of operation has changed after having determined to be the first amount of operation and then reached the second amount of operation, the amount of operation is calculated so as to decrease with respect to the reaction force of manipulation obtained at the time when the amount of operation reached the second amount of operation as the length of time period during which the amount of operation is held at the second amount of operation increases, and that when it is determined that the amount of operation has changed after having determined to be the first amount of operation and fell within the range between the first amount of operation and the second amount of operation, the reaction force of manipulation which corresponds to the reaction force of manipulation obtained at the time when the amount of operation fell within the range is calculated;
an reaction force of manipulation control unit for setting a reaction force of manipulation control signal for operating the sense-of-force imparting means based on the reaction force of manipulation calculated by the reaction-force-of-manipulation calculating unit and outputs the reaction force of manipulation control signal to the sense-of-force imparting means;
a scrolling speed calculating unit for performing arithmetic operation for calculating a scrolling direction corresponding to the operating direction and a scrolling speed corresponding to the magnitude of the reaction force of manipulation based on the reaction force of manipulation calculated by the reaction-force-of-manipulation calculating unit; and
a scroll control unit for setting a scroll control signal for activating the display means so that the screen pages are scrolled at a scrolling speed calculated by the scrolling speed calculating unit and outputting the scroll control signal to the display means.

5. A sense of force imparting input/output apparatus according to Claim 4, wherein the control means comprises an oscillation control unit for outputting an oscillation control signal to the sense-of-force imparting means, the oscillation control signal activating the sense-of-force imparting means to make the operating member oscillate when the amount of operation is determined to be the first amount of operation and when the amount of operation is determined to be the second amount of operation by the amount of operation determining unit.

6. A sense of force imparting input/output apparatus according to Claim 4 or 5, wherein the scrolling speed calculating unit is adapted to calculate a scrolling speed so as to increase with the increase of the reaction force of manipulation calculated by the reaction-force-of-manipulation calculating unit.
